Europäisches Patentamt

European Patent Office

Office européen des brevets

(19)

(11) Veröffentlichungsnummer: **0 017 124**
**B1**

(12) **EUROPÄISCHE PATENTSCHRIFT**

(45) Veröffentlichungstag der Patentschrift:
30.11.83

(21) Anmeldenummer: **80101542.1**

(22) Anmeldetag: **24.03.80**

(51) Int. Cl.³: **H 02 B  1/10,** H 02 B  1/08,
H 01 H  13/50

(54) Elektrisches Gerät, insbesondere Installationsgerät.

(30) Priorität: **28.03.79  DE 2912208**

(43) Veröffentlichungstag der Anmeldung:
**15.10.80 Patentblatt 80/21**

(45) Bekanntmachung des Hinweises auf die Patenterteilung:
**30.11.83 Patentblatt 83/48**

(84) Benannte Vertragsstaaten:
**AT BE CH FR GB IT LU NL SE**

(56) Entgegenhaltungen:
**DE - A - 517 460**
**DE - A - 2 212 492**
**DE - A - 2 233 877**
**FR - A - 2 037 868**
**FR - A - 2 372 531**

(73) Patentinhaber: **Starkstrom Gummersbach GmbH,**
**D-5277 Marienheide-Rodt (DE)**

(72) Erfinder: **Grunst, Heinz, Hubertusweg 24,**
**D-5277 Marienheide (DE)**
Erfinder: **Kleine, Heinz, Neue Strasse 4,**
**D-5277 Marienheide (DE)**

(74) Vertreter: **Köhne, Friedrich, Dipl.-Ing.,**
**Postfach 250265 Lothringer Strasse 81,**
**D-5000 Köln 1 (DE)**

Elektrisches Gerät, insbesondere Installationsgerät

Die Erfindung bezieht sich auf ein elektrisches Gerät, insbesondere Installationsgerät, wie Signalleuchte, Schaltgerät, Transformator od. dgl., zum Einbau an eine Montageplatte, welches aus mehreren Bauelementen besteht, die durch seitliche einander gegenüberliegende, von außen sichtbare und betätigbare federnd elastische Stege einerseits und Raststellen andererseits, über welche die Stege von außen greifen, lösbar verbunden sind, wobei die Stege an den Außenseiten ebenflächig ausgebildet sind.

Ein Gerät dieser Bauart ist aus der FR-A-2 215 688 bekannt. Bei dieser Konstruktion sind jedoch die federnden Verbindungsstege T-förmig ausgebildet und demgemäß sind an dem jeweils benachbarten Bauteil entsprechende T-förmige Ausnehmungen vorgesehen, in die dann die T-förmigen Verbindungsstege einrasten. Dabei ergeben sich nur verhältnismäßig kleine Anliege- bzw. Halteflächen, nämlich nur an den beiderseitigen geringen Überständen des jeweiligen Querstückes des T-förmigen Verbindungssteges. Schon hierdurch ergibt sich eine verhältnismäßig geringe Haltewirkung. Es kommt hinzu, daß es recht schwierig ist, z. B. in der bekannten Druckspritztechnik, exakte T-förmige Aussparungen vorzusehen. Dabei ist es vor allem schwierig, die beiderseitigen kleinen Anlage- und Rastflächen exakt senkrecht zur betreffenden Bauelementenebene bzw. zur Ebene der Verbindungsstege herzustellen. Es ergeben sich daher vor allem in den Ausnehmungen Flächen mit einer gewissen Schrägung, so daß sich die Verbindungsstege schon bei verhältnismäßig geringer mechanischer Belastung wieder aus den Raststellen lösen. Aus Platzgründen muß man im übrigen die Verbindungsstege als solche verhältnismäßig schmal ausführen, so daß diese folglich eine geringe Festigkeit und eine zu hohe Elastizität erhalten.

Ferner ist aus der OS-A-3 350 531 ein anders aufgebautes elektrisches Gerät bekannt, bei dem man weitere Einbauten, wie z. B. einen Drehknopf vorsehen kann.

Gegenüber dem Stand der Technik liegt der vorliegenden Erfindung die Aufgabe zugrunde, ein Gerät zu schaffen, welches bei einfachem Zusammenstecken der Bauelemente einen besonders sicheren Zusammenhalt der Bauelemente untereinander gewährleistet und auch eine einfache sichere Bindung durch Zusammenstecken mit der Montageplatte gestattet, ohne daß es besonderer Hilfsmittel, wie Schrauben od. dgl. bedarf.

Die gestellte Aufgabe wird erfindungsgemäß dadurch gelöst, daß die Stege Ausnehmungen aufweisen, in welche Rastvorsprünge eingreifen, daß ein weiteres Bauelement als Zwischenstück vorgesehen ist, welches nach dem benachbarten Bauelement zu mit Stegen und nach der Montageseite zu mit Befestigungszapfen versehen ist, daß die Befestigungszapfen in Bohrungen einer für mehrere Geräte gemeinsamen Schiene angeklemmt sind, daß die Schiene an ihren Enden an Raststellen der Montageplatte gehalten ist, und daß diese Raststellen Holzzapfen mit gekröpften Federn aufweisen.

Da die Stege erfindungsgemäß Ausnehmungen aufweisen, kann man sie sehr breit ausführen und man erhält dadurch eine verhältnismäßig breite Anlagefläche im eingerasteten Zustand. Vor allem ist es bei dieser Gestaltungsart möglich, exakt senkrecht zu den Flächen verlaufende Anlageflächen sowohl in der Ausnehmung als auch in den hiermit zusammenwirkenden Rastvorsprüngen auszuführen, so daß im eingerasteten Zustand eine sehr feste und sichere Halterung gegeben ist. Bei mechanischer Beanspruchung eines zusammengesetzten Gerätes, z. B. durch Zug oder Biegen, können sich die elastischen Stege nicht aus ihrer Raststellung ausbiegen.

Vorteilhafte Ausgestaltungen der Erfindung ergeben sich aus den Unteransprüchen.

In der Zeichnung sind Ausführungsbeispiele der Erfindung im Schema dargestellt, und zwar zeigt

Fig. 1 eine perspektivische Ansicht eines elektrischen Gerätes mit mehreren Bauelementen, die mit Abstand voneinander gezeichnet sind,

Fig. 2 eine Einzelheit in Teilansicht,

Fig. 3 die Bauelemente entsprechend Fig. 1 in Vorderansicht, ebenfalls mit Abstand voneinander,

Fig. 4 eine Seitenansicht zu Fig. 3 und

Fig. 5 ein einzelnes Bauelement in anderer Gestaltung in Teilseitenansicht.

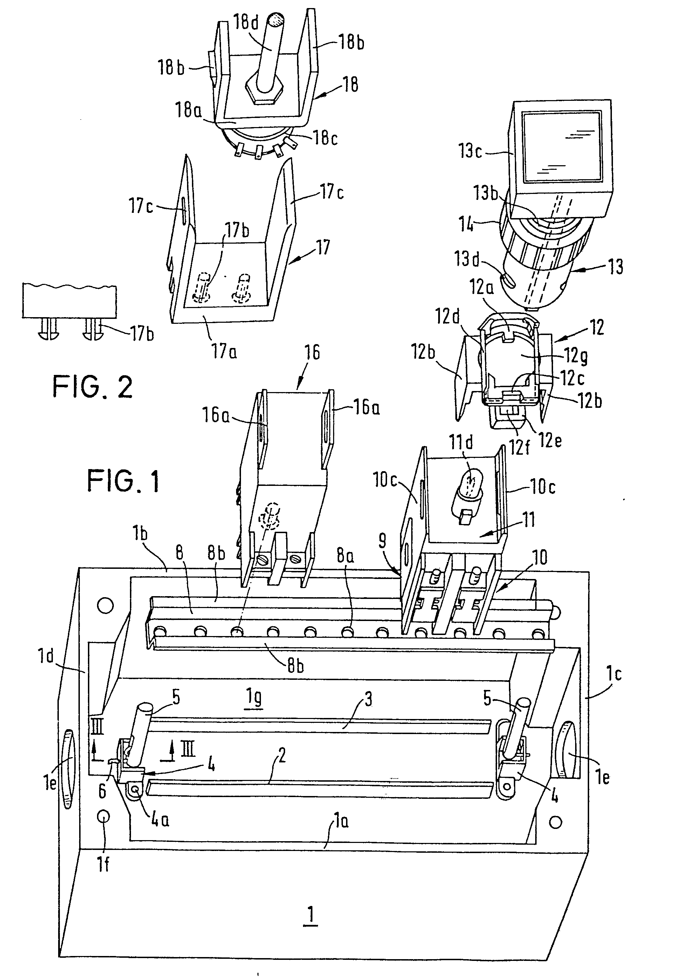

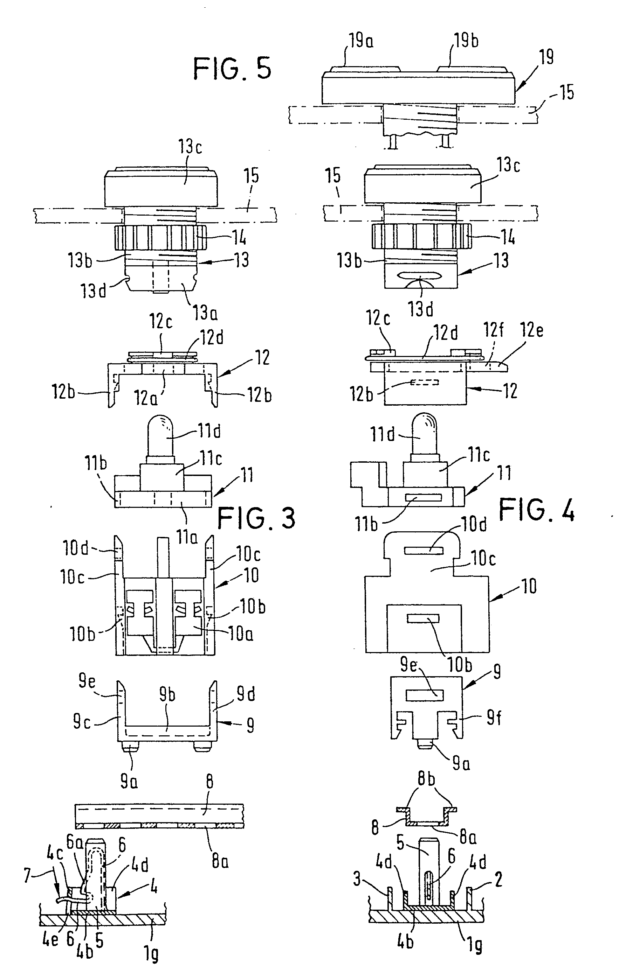

Bei dem in Fig. 1 dargestellten Ausführungsbeispiel handelt es sich um elektrisches Gerät, welches insgesamt zur Aufnahme in einem Gerätegehäuse 1 bestimmt ist. Es mag aber besonders hervorgehoben werden, daß anstelle des Gehäuses 1 sinngemäß auch ein an sich bekannter Schaltschrank oder eine Montageplatte Verwendung finden kann, wie sie beispielsweise in den Fig. 3, 4 und 5 strichpunktiert eingezeichnet und mit dem Bezugszeichen 15 versehen ist. Die Erfindung beschränkt sich also nicht auf die Auswahl der Anbringung oder Unterbringung des elektrischen Gerätes.

Ferner soll vorausgeschickt werden, daß die nachfolgend einfach als Bauelemente bezeichneten Teile des elektrischen Gerätes, die zum wahlweisen Zusammensetzen bestimmt sind, unterschiedlicher Natur sein können. Die Bauelemente können z. B. als Signalleuchten oder Leuchtmelder jeder Art ausgebildet sein oder aber als Schaltgeräte, die in an sich bekannter Weise durch Drucktasten, Schlüssel od. dgl. betätigt werden. Des weiteren können auch Transformatoren, Potentiometer und weitere Bauelemente zur Anwendung kommen, wie sie in Schaltschränken, auf Montageplatten usw.

üblicherweise zusammengestellt werden.

Bei den in der Zeichnung dargestellten Bauelementen sind die elektrischen Inneneinrichtungen nicht im einzelnen gezeichnet worden, weil es hierauf bei der vorliegenden Erfindung nicht ankommt. Von wesentlicher Bedeutung ist vielmehr die besondere Art des Zusammensetzens der Bauelemente und der lösbaren Verbindung miteinander und mit dem betreffenden Träger, also entweder dem Gerätegehäuse, dem Schaltschrank oder der jeweils vorhandenen Montageplatte.

Anhand der Fig. 1 bis 5 soll ein besonders vorteilhaftes Ausführungsbeispiel eines Installationsgerätes beschrieben werden. Das Gerätegehäuse 1, das zur Aufnahme aller Bauelemente bestimmt ist, besteht im wesentlichen aus den längsverlaufenden Seitenwänden 1a, 1b, den beiden Querwänden 1c, 1d, die Öffnungen 1e zum Zu- und Abführen von elektrischen Kabeln besitzen, und aus dem Boden 1g. Die Ecken des Gerätegehäuses können verstärkt und mit Gewindebohrungen 1f versehen sein, so daß ein gemeinsamer Gehäusedeckel aufgeschraubt werden kann, der in der Zeichnung nicht dargestellt ist und der entsprechend der Anzahl der nachfolgend erläuterten und in dem Gerätegehäuse nebeneinander angeordneten Einzelgeräte mit Durchbrüchen versehen ist, duch die bedienungsseitigen Geräteköpfe mit ihren Drucktasten oder Schaltern usw. nach außen hin durchragen.

Auf dem Boden 1g des Gerätegehäuses 1 sind zwei längsverlaufende Stützschienen 2, 3 vorgesehen, auf welchen sich die beiden nach außen umgebördelten Flansche 8b einer ansonsten U-förmigen gemeinsamen Schiene 8 abstützen können. Die gemeinsame Schiene 8 dient dazu, mehrere Bauelemente nebeneinander aufzunehmen, wie nachfolgend noch näher erläutert wird. Zu diesem Zweck dienen die in Reihe nebeneinander unter entsprechendem Abstand gehaltenen Bohrungen 8a, in die Zapfen der Bauelemente, z. B. gespaltene federnd elastische Zapfen 17b gemäß Fig. 2 eingreifen können, wobei die letzteren solche Außenvorsprünge an ihren Enden besitzen, daß sie nach dem Einstecken in die Bohrungen 8a einrasten, einen festen Halt sichern, zu gegebener Zeit aber auf einfache Weise wieder gelöst werden können.

Das Befestigen der Schiene 8 im Gerätegehäuse 1 erfolgt wie die Befestigung der nachfolgend erläuterten Bauelemente untereinander durch seitliche, von außen sichtbare und betätigbare federnd elastische, in Raststellen eingreifende Bauteile. Diese sind im unteren Teil der Fig. 3 und 4 deutlich zu ersehen. Die Schiene 8 wird mit den beiden äußeren Bohrungen über je einen Holzzapfen 5 geschoben. In jedem Hohlzapfen befindet sich eine gekröpfte Feder 6, die so ausgebildet ist, daß die Schiene in Raststellen gehalten ist, nämlich beim Überschieben über das Kröpfungsteil 6a der Feder. Durch Druck in Richtung des Pfeiles 7 auf das freie nach außen ragende Federende wird dieses Kröpfungsteil entsprechend einer Schwenkbewegung entgegen dem Uhrzeigersinn in das Innere des Hohlzapfens bewegt, so daß die Schiene 8 wieder von dem Hohlzapfen abgenommen werden kann. Der Hohlzapfen 5 sitzt in einem ober- und innenseitig offenen Kästchen 4, das durch Schrauben 4a od. dgl. auf dem Boden 1g des Gerätegehäuses fest angebracht sein kann. Die Stirnwand 4c des Kästchens besitzt eine Öffnung zum Hindurchtreten des freien Endes der Feder 6, während die Seitenwände 4d zur besseren Führung der Schiene 8 dienen. Der Hohlzapfen 5 sitzt auf dem Bodenplättchen 4b des Kästchens 4.

Das Befestigen der Schiene 8 in der beschriebenen Weise erfolgt jedoch erst dann, wenn die Bauelemente in der gewünschten Anzahl und Zusammensetzung nebeneinander auf der Schiene befestigt sind.

Die Bauelemente können wie gewünscht zusammengesetzt werden. Bei dem in der Zeichnung dargestellten Ausführungsbeispiel ist zunächst ein Zwischenstück 9 vorgesehen, welches auf der Unterseite eines Bodenteiles 9b Zapfenvorsprünge zum Einsetzen in die Bohrungen 8a der Schiene 8 besitzt. Ferner sind im wesentlichen ebenflächige Stege 9c, 9d vorgesehen, die federnd elastisch sind und Ausnehmungen 9e aufweisen, die mit Raststellen 10b eines darüber zu befestigenden Bauelementes 10 zusammenwirken. Wie Fig. 4 in Seitenansicht auf das Zwischenelement 9 zeigt, können weitere Rastvorsprünge 9f vorgesehen sein, die beispielsweise über die Ränder der Schiene 8 federnd elastisch greifen und für einen zusätzlichen Halt Sorge tragen.

Bei dem Bauelement 10 kann es sich beispielsweise um einen Transformator oder um ein Schaltgerät oder einfach um ein elektrisches Anschlußteil mit Schraubklemmen 10a zur Verbindung mit elektrischen Stromleitungen handeln. Statt eines Transformators kann auch in einem gleichen Gehäuse ein Widerstand zusammen mit einer Diode vorgesehen werden. Ein solches Bauelement hat den Vorteil einer kostengünstigen Lösung zum Herabsetzen der Spannung, verglichen mit den Kosten eines Transformators.

Das Bauelement 10 weist wiederum zwei einander gegenüberliegende im wesentlichen ebenflächige Stege 10c mit Raststellen 10d auf, wobei die letzteren mit entsprechenden Vorsprüngen 11b eines aufgesetzten weiteren Bauelementes 11 zusammenwirken. Im vorliegenden Falle ist dieses Bauelement mit einem Lampensockel 11c und einer Glühlampe 11d ausgestattet.

Es folgt ein weiteres zwischengeschaltetes Bauelement 12, welches zwei Verbindungsfunktionen in sich vereinigt, nämlich einmal durch die beiden ebenflächigen, in diesem Falle nach unten hin ragenden Stege 12b, die wieder seitlich und von außen sichtbar und betätigbar federnd elastisch in Raststellen des unteren Bauteiles 11 eingreifen. Es versteht sich, daß das Mittelteil 12a gemäß Fig. 1 eine mittige große Öffnung zum Hindurchführen von Glühlampen und Lampensockel aufweist. Die zweite Funktion, nämlich die Verbindung mit einem oberen anschließenden Bauelement 13 geschieht mit Hilfe einer etwa U-förmigen Feder 12d, die so in dem Zwischenelement 12 gehalten ist, daß die beiden parallel zueinander verlaufenden Federschenkel teilweise innerhalb der großen mittigen Öffnung 12g laufen. Dadurch sind wieder federnd elastische Bauteile geschaffen, die in Raststellen, in diesem Falle in Nuten 13d, des Kopfes 13 einer Signalleuchte eingreifen. Dieser Signalleuchtenkopf besteht im wesentlichen aus einem hohlen Zylinder mit einem Außengewinde 13b, auf welches in an sich bekannter Weise ein Befestigungsring 14 aufschraubbar ist, wenn die Befestigung an einer Montageplatte oder bei gegebener Ausgestaltung in einem Schaltschrank vorgesehen ist. Am äußeren Ende des Zylinders sitzt beispielsweise ein runder oder rechteckiger Kopf 13c mit farbiger lichtdurchlässiger Platte. In anderer Ausgestaltung kann statt dessen auch ein Drucktaster od. dgl. vorgesehen sein. Gemäß Fig. 5 kann auch auf einem gemeinsamen Zylinder ein Kopf 19 mit zwei oder mehreren Signalleuchten 19a, 19b oder mit Drucktasten angebracht sein. Zum Lösen der Rastverbindung zwischen den Bauelementen 12 und 13 ist an dem ersteren ein U-förmiger Bügel 12e sowie Öffnungen 12c und 12f vorgesehen. Man kann hier in einfacher Weise durch Einschieben eines Schraubenziehers die nach innen umgewinkelten Enden der Schenkel der Feder 12d nach außen hin bewegen, so daß die Rastung aufgehoben und das Bauelement 13 mit seinem Hohlzylinder aus der Öffnung 12g des Bauelementes 12 herausgezogen werden kann.

Im linken Teil der Fig. 1 ist eine andere Zusammenstellung von Bauelementen 16 bzw. 17 und 18 ersichtlich. Das Bauelement 16 kann wieder mit Zapfen gemäß den Zapfen 17b in Fig. 2 auf der Schiene 8 eingerastet werden, während die einander gegenüberliegenden ebenflächigen Stege 16a an der Oberseite zum Anschluß bzw. zur Verbindung mit anderen geeigneten Bauelementen dienen. Das Bauelement 17 mit Bodenplatte 17a, auf der Unterseite befindlichen Befestigungszapfen 17b und den beiden einander gegenüberliegenden ebenflächigen Stegen 17c dient wieder als Zwischenelement, beispielsweise zur Verbindung mit einem Regelwiderstand oder Potentiometer 18, dessen elektrisches Teil 18c mit Drehachse 18d an einem U-förmigen Halter gelagert ist, wobei zu beiden Seiten des Mittelstückes 18a wieder federnd elastische Stege oder Schenkel 18b mit Rastvorsprüngen vorgesehen sind, die in die Rastnuten des Bauelementes 17 eingreifen können.

Wie aus obigem hervorgeht, sind alle Bauelemente untereinander und mit dem Gerätegehäuse bzw. dem Schaltschrank bzw. der Montageplatte konsequent durch seitliche, von außen sichtbare und betätigbare federnd elastische Bauteile verbunden, und zwar so, daß die Verbindung nur durch gegenseitiges Einrasten zustande kommt. Das Lösen dieser Raststellen kann dann aber, falls gewünscht, in einfacher Weise von außen, beispielsweise mittels eines Schraubenziehers, erfolgen. Des weiteren kann man jede Raststelle von außen auf richtigen Sitz prüfen.

## Patentansprüche

1. Elektrisches Gerät, insbesondere Installationsgerät, wie Signalleuchte, Schaltgerät, Transformator od. dgl., zum Einbau an eine Montageplatte, welches aus mehreren Bauelementen (10, 11, 12, 13; 16, 17, 18) besteht, die durch seitliche einander gegenüberliegende, von außen sichtbare und betätigbare federnd elastische Stege (10c; 12b) einerseits und Raststellen (10b, 11b) andererseits, über welche die Stege von außen greifen, lösbar verbunden sind, wobei die Stege (10c; 12b) an den Außenseiten ebenflächig ausgebildet sind, dadurch gekennzeichnet, daß die Stege (9c, 9d; 10c; 12b; 17c) Ausnehmungen (10d) aufweisen, in welche Rastvorsprünge (10b, 11b) eingreifen, daß ein weiteres Bauelement als Zwischenstück (9) vorgesehen ist, welches nach dem benachbarten Bauelement zu mit Stegen (9c) und nach der Montageseite zu mit Befestigungszapfen (9a, 17b) versehen ist, daß die Befestigungszapfen in Bohrungen (8a) einer für mehrere Geräte gemeinsamen Schiene (8) angeklemmt sind, daß die Schiene an ihren Enden an Raststellen der Montageplatte gehalten ist, und daß diese Raststellen Hohlzapfen (5) mit gekröpften Federn (6) aufweisen.

2. Elektrisches Gerät nach Anspruch 1, dadurch gekennzeichnet, daß ein weiteres Bauelement als Zwischenstück (12) vorgesehen ist, welches nach dem benachbarten Bauelement zu mit Stegen (12b) versehen ist, und welches eine mittige Öffnung (12a) aufweist, in welche ein Schaft eines Kopf-Elementes (13) einschiebbar ist, und daß in dem Zwischenstück (12) eine etwa U-förmige Feder (12d) angeordnet ist, deren Schenkel in Nuten (13d) des Kopfelementes (13) eingreifen.

3. Elektrisches Gerät nach Anspruch 1 oder 2, dadurch gekennzeichnet, daß das Zwischenstück (9) mit weiteren Rastvorsprüngen (9f) versehen ist, welche über die Ränder der Schiene (8) federnd elastisch greifen.

## Claims

1. Electrical apparatus, especially installation apparatus, such as a signal lamp, switch gear, transformer or the like, for incorporation onto a mounting plate which comprises several elements (10, 11, 12, 13; 16, 17, 18), which are detachably connected by lateral resilient webs (10c; 12b) lying opposite each other, which can be seen and actuated from outside, on the one side, and by stop points (10b, 11b) on the other side, over which the webs engage from outside, the webs (10c; 12b) being constructed with a flat surface on the external sides, characterised by the fact that the webs (9c, 9d; 10c; 12b; 17c) reveal recesses (10d) into which stop keys (10b, 11b) engage, that a further element is provided as an intermediate piece, which, towards the adjacent element, is provided with webs (9c), and towards the mounting side, with fastening spigots (9a, 17b), that the fastening spigots are secured in holes (8a) of a rail (8) common to several devices, that the rail is held at its ends on stop points of the mounting plate, and that these stop points reveal hollow spigots (5) with springs bent at right angles.

2. Electrical apparatus according to Claim 1, characterised by the fact that a further element is provided as an intermediate piece (12), which is provided with webs (12b) towards the adjacent element, and which reveals a central opening (12a) into which a shank of a head element (13) can be pushed, and that a more or less U-shaped spring (12d) is arranged in the intermediate piece (12), the limbs of which engage in grooves (13d) of the head element (13).

3. Electrical apparatus according to Claim 1 or 2, characterised by the fact that the intermediate piece (9) is provided with further stop keys which engage resiliently over the edges of the rail (8).

## Revendications

1. Appareil électrique, notamment appareil d'installation, tels que feux de signalisation, commutateurs, transformateurs ou analogues, destinés à être montés sur une plaque de montage, ledit appareil étant constitué par plusieurs éléments de structure (10, 11, 12, 13, 16, 17, 18) qui sont reliés par des barrettes élastiques (10c, 12b) latérales situées en vis-à-vis, visibles et actionnables de l'extérieur à façon de ressorts, d'une part, et des emplacements de repos ou d'arrêt (10b, 11b) d'autre part, par lesquels les barrettes font prise de l'extrérieur, lesdites barrettes (10c, 12b) étant constituées de façon plane sur les faces extérieures, caractérisé en ce que les barrettes (9c, 9d, 10c, 12b, 17c) présentent des évidements (10d) dans lesquels s'insèrent des saillies d'arrêt (10b, 11b), en ce qu'un autre élément de structure est prévu comme pièce intermédiaire (9), qui est pourvu, en direction de l'élément de structure voisin, de barrettes (9c) et, vers le côté de montage, de tétons de fixation (9a, 12b), en ce que les tétons de fixation sont serrés dans des perçages (8a) d'un rail (8) commun à plusieurs appareils, en ce que le rail est maintenu à ses extrémités aux emplacements de repos ou d'arrêt de la plaque de montage et en ce que ces emplacements d'arrêt comportent des tétons creux (5) avec ressorts coudés (6).

2. Appareil électrique selon la revendication 1, caractérisé en ce qu'un autre élément de structure est prévu comme pièce intermédiaire (12), celui-ci étant pourvu de barrettes (12b) en direction de l'élément de structure voisin et comportant une ouverture centrale (12a) dans laquelle peut être introduite une broche d'un élément de tête (13) et en ce que dans la pièce intermédiaire (12) un ressort (12d) sensiblement en forme de U est disposé, ressort dont les branches s'insèrent dans des rainures (13d) de l'élément de tête (13).

3. Appareil électrique selon la revendication 1 ou 2, caractérisé en ce que la pièce intermédiaire (9) est pourvue d'autres saillies d'arrêt (9f) qui saisissent élastiquement, à la façon de ressorts, les bords du rail (8).

FIG. 2

FIG. 1

FIG. 5

FIG. 3

FIG. 4